# EUROPEAN PATENT SPECIFICATION

(11) **EP 0 696 707 B1**
(45) Date of publication and mention of the grant of the patent: **04.07.2001**
(21) Application number: 95305433.5
(22) Date of filing: 03.08.1995
(51) Int. Cl.: F23L 15/02

(54) **A regenerative burner combustion system and method of combustion**
Regenerativ-Brenner Verbrennungssystem und Verbrennungsverfahren
Système de brûleur à régénération et procédé de combustion

(30) Priority: 10.08.1994 JP 18801394; 19.10.1994 JP 25368394; 19.12.1994 JP 31477294
(43) Date of publication of application: 14.02.1996
(73) Proprietor: TOKYO GAS COMPANY LIMITED, Tokyo (JP)
(72) Inventor: Nakamachi, Ichiro, Abiko City, Chiba Prefecture (JP); Koizumi, Kenji, Itabashi-ward, Tokyo (JP)
(74) Representative: Bryer, Kenneth Robert

(56) References cited:
- EP-A- 0 038 257
- EP-A- 0 257 840
- EP-A- 0 463 218
- PATENT ABSTRACTS OF JAPAN vol. 18 no. 217 (M-1594) ,19 April 1994 & JP-A-06 011121 (CHUGAI RO CO LTD) 21 January 1994,

## Description

The present invention is directed to a regenerative burner, a combustion system and a method of burning using the regenerative burner.

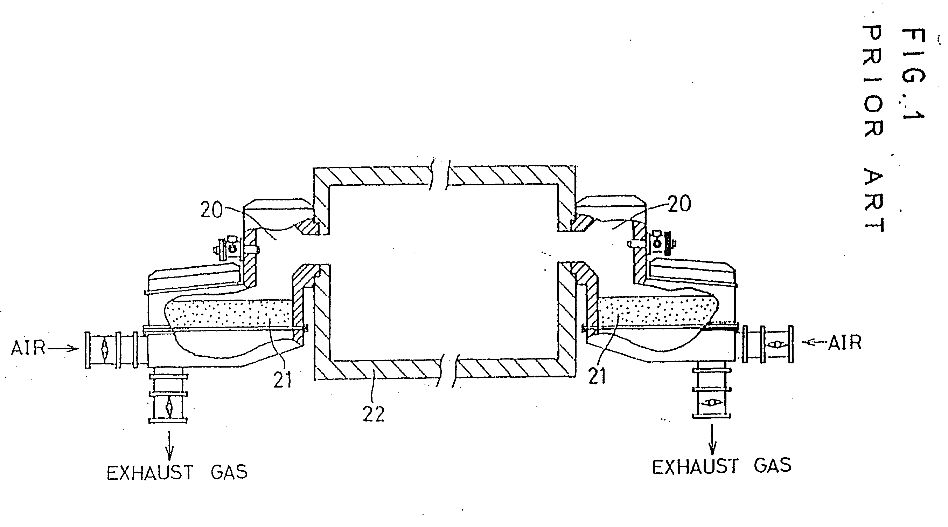

A known combustion system is shown in Figure 1 and comprises a furnace 22 equipped with a pair of regenerative burners each having an integrated structure consisting of a combustion section 20 and a regenerative section 21. The burners are used alternately for supplying fuel and air to the furnace and for receiving exhaust gases from it. More specifically, in use, air passes through the regenerative section of one burner where it is pre-heated while the exhaust gas passes through the regenerative section of the other burner where the heat is stored, to be used in turn to pre-heat the intake air. This results in the recovery of waste heat, thereby achieving a high degree of thermal efficiency.

The regenerative burners shown in Figure 1 require that the combustion sections and the regenerative sections of the burners be lined with a refractory material for heat insulation since they are subject to the flow of high temperature exhaust gas and the generation of high temperature flames. Furthermore, since the fuel supply ducts are also exposed to high temperatures at their tips, they deteriorate due to high temperature oxidation. To avoid this, air cooling or water cooling must be used. Moreover, the complicated and large structure of the entire apparatus makes the overall furnace equipment expensive and combustion in the presence of pre-heated air at high temperatures causes large quantities of nitrogen oxides (NOx) to be produced.

One known regenerative burner is described in Patent Abstracts of Japan, Vol. 18, No. 217 (M1594), 19 April 1994. This burner has a fuel duct for supplying fuel to the chamber, a regenerative preheater containing heat storage material for preheating air for supply to the chamber and alternately receiving hot exhaust gases from the chamber to reheat its storage material, a duct for supplying air heated in the regenerative preheater to the chamber, in which the fuel duct and the preheated air supply duct open directly into the chamber at mutually spaced positions and the burner includes an air supply duct which opens around the outlet of the fuel supply duct for supplying air for mixing with the fuel.

In this prior art document, however, the two air supply ducts which act in alternation are located one on either side of the burner such that, in use, one duct supplies hot air from one regenerative preheater to one side of the flame created by the introduction of fuel through the outlet duct, whilst the other hot air duct withdraws combustion products from the combustion chamber. Because these ducts are located one on either side of the fuel duct, the flame within the chamber is likely to be distinctly asymmetrical and there is a possibility that partly burnt fuel on the side of the flame opposite that preheated-air duct through which air is being introduced into the combustion chamber at one time is drawn into the duct acting to exhaust the combustion products, thereby increasing the risk of combustion outside the combustion chamber.

The present invention seeks to provide a burner which will not suffer from this problem.

Accordingly, the present invention provides, in one aspect, a regenerative burner combustion system for a combustion chamber, in which a burner has a fuel duct for supplying fuel to the chamber, a regenerative preheater containing heat storage material for preheating air for supply to the chamber in a combustion stage of the burner operation and alternately for receiving hot exhaust gases from the chamber to reheat its storage material in an exhaust stage of the burner operation, and at least one duct for supplying air heated in the regenerative preheater to the chamber, in which the fuel duct and the preheated-air supply duct open directly into the chamber at mutually spaced positions, and in which the burner further includes a cool-air supply duct which opens around the outlet of the fuel supply duct, characterised in that there are provided two burners for the combustion chamber and in that a respective flame stabiliser is located at or adjacent each fuel duct outlet for maintaining a flame during the exhaust stage of the burner operation.

In use of the above burner, fuel is supplied to a combustion chamber, usually a furnace, and burns first with cool air, conveniently a room-temperature supply, at the inlet to the chamber at a relatively low temperature at which NOx production is inhibited. The cool air and low flame temperature also slow the deterioration of the fuel duct outlet due to oxidation compared with prior art burners.

In addition, once a stable flame is achieved, a flame stabiliser being provided adjacent the fuel duct outlet, combustion of unused fuel continues in the chamber with the aid of the preheated air supplied through the separate duct, preferably several ducts arranged around the fuel outlet but spaced therefrom. These preheated air supplies, preferably injected at high velocities into the furnace, entrain gases, largely inert gas, in the chamber so that they become diluted before mixing with the fuel. This reduces the reaction rate and again lowers the flame temperature compared with that in known furnaces, and again inhibits NOx production.

The invention also provides a regenerative burner combustion system comprising a combustion chamber equipped with several pairs of regenerative burners as described above, each burner being connected to the chamber with its fuel duct and at least one preheated-air supply duct opening directly into the combustion chamber at spaced positions and the cool-air supply duct opening into the chamber around the fuel supply duct outlet therein, the burners being operable in alternation each to supply air heated in its preheater to the chamber to mix with fuel therein for combustion and to receive exhaust gases therefrom to reheat its heat-storage material.

The regenerative burners are preferably fitted with their heat storage material at least partly located in the combustion chamber wall. The chambers for the heat storage material may open into a manifold which serves a plurality of preheated-air supply ducts and is, at least in some embodiments, tapered towards their inlets.

The heat storage chamber may itself be tapered to facilitate its packing with the heat storage material when this is in loose form, for example comprising loose balls of ceramics or metal. Suitable inlets and outlets may be provided for the heat-storage material, preferably enabling the material to be changed without dismantling of the burners from the furnace.

The burner of the invention may include means for providing a pilot light, or burner, in which case it preferably has an auxiliary fuel duct located in the cool-air supply duct and opening near the stabiliser.

A further aspect of the invention comprises a method of achieving fuel-in-air combustion in a combustion chamber which preferably uses the combustion system described above. More particularly, the invention comprises a method of achieving fuel-in-air combustion in a combustion chamber having a pair of regenerative burners, including the steps of supplying fuel and preheated air to the combustion chamber via one burner in a combustion stage by supplying the fuel and the preheated air to the chamber through respective fuel and preheated-air ducts having mutually spaced outlets such that the flows mix and burn within the body of the chamber, and withdrawing combustion products through the preheated-air ducts of the other burner in an exhaust stage, and alternating the combustion and exhaust stages of the said two regenerative burners, and at least when the combustion chamber is below a temperature at which the fuel and air therein burn spontaneously, supplying cool air to the chamber through cool air inlets immediately around the outlet of the fuel duct of the burner in the combustion stage at that time into the chamber and burning the fuel in the cool air to form a relatively low-temperature flame, and also supplying cool air and fuel to the chamber during the exhaust stage of each burner whereby to maintain a flame at flame stabilising means adjacent the said fuel duct outlet to the combustion chamber during the said exhaust stage.

Several embodiments of the invention will now be more particularly described, by way of example, with reference to the accompanying drawings, in which:
Figure 1 shows a pair of prior-art regenerative burners installed in a furnace;
Figure 2 shows two views similar of one embodiment of a regenerative burner of the present invention;
Figure 3 is an illustration of a pair of the regenerative burners of Figure 4 installed in a furnace; and
Figure 4 shows two views of another embodiment of a regenerative burner of the present invention installed in a furnace.

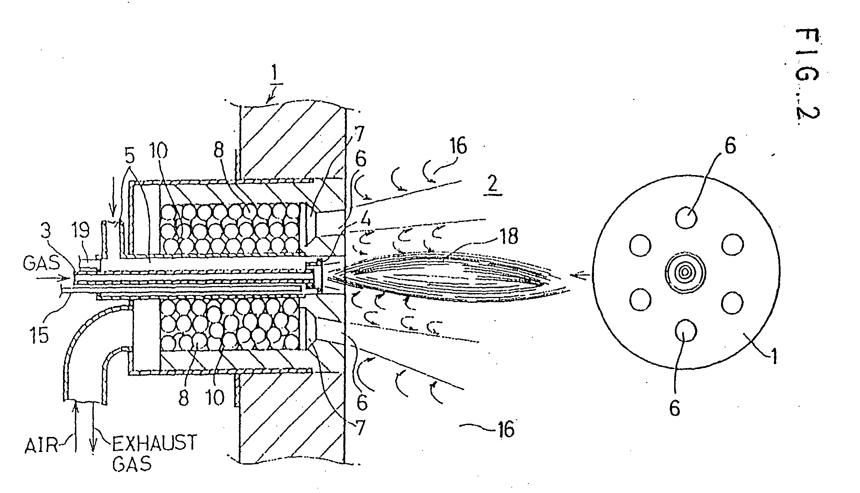

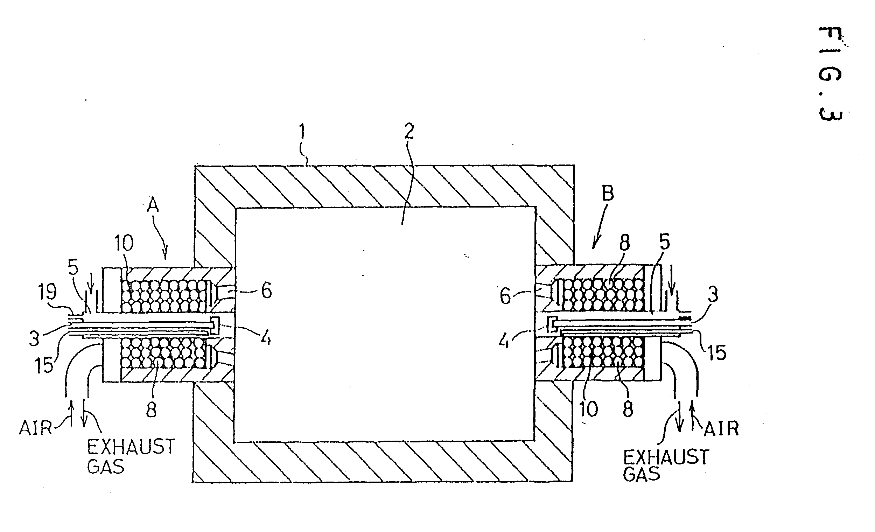

In the embodiments of the invention shown in Figures 2 to 4, similar features of the apparatus are indicated by the same references. In general, Figures 2 to 4 show a furnace indicated 2 with a wall 1 and a burner system including a pair of regenerative burners A, B. These burners A, B each include an air supply duct 5 for supplying cool air, at room temperature, which opens directly into the furnace 2 and a fuel supply duct 3 arranged coaxially within the room-temperature supply duct 5 and opening through a flame stabiliser 4 into the furnace 2.

Around the room temperature supply duct 5 are a plurality of ducts 6 for supplying preheated air at a high temperature, these opening directly into the furnace 2 through apertures separate from the room temperature supply outlet. The high temperature ducts 6 receive air through a common manifold 7 from a regenerative heating section, or regenerator, 10 which also surrounds the room temperature supply duct 5 and is packed with heat storage material 8, such as ceramic or metal balls, honeycomb, fins, meshes or any combination thereof; balls are shown by way of example in the drawings.

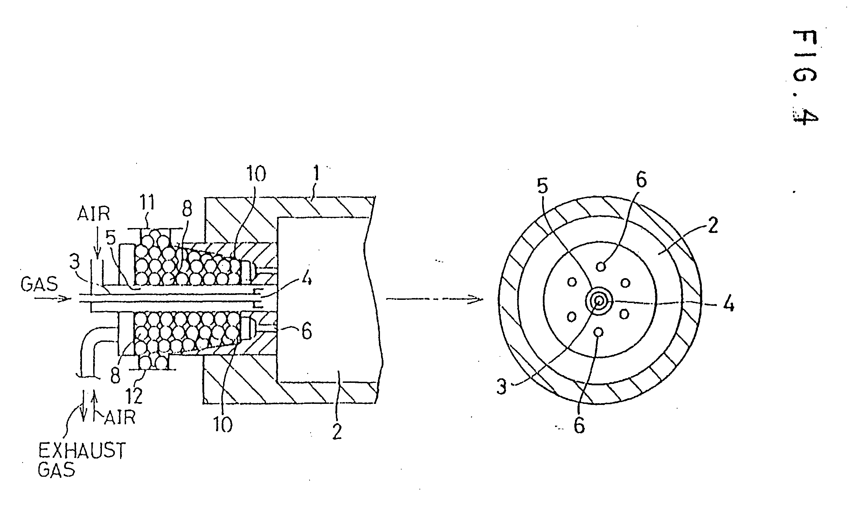

The manifold 7 preferably tapers towards its respective outlets to the high temperature ducts 6 while the regenerative section 10 may also taper to its outlet to the manifold 7 as shown in the embodiment of Figure 4. The regenerative section 10 is preferably located at least partly within the furnace wall 1, as shown in the drawings.

An inlet 11 for the heat storage material 8 may be provided, preferably at the top of the regenerator 10 and at a position remote from the furnace 2, as shown in Figure 4 while an outlet 12 for this material may be provided at the bottom.

In use, the regenerators 10 of the two regenerative burners A, B of the burner system are operated in alternation to supply preheated air to the furnace 2 to effect combustion of fuel supplied continuously through a duct 3 and to receive hot exhaust products from the furnace to reheat their heat-storage material 8. More particularly, when fuel is introduced into the fuel supply duct 3 of the regenerative burner A (in combustion mode), it is mixed with the air injected through the room temperature air supply duct 5 near the flame stabiliser 4 and downstream thereof to initiate combustion. This combustion takes place with the fuel surrounded by fresh air and, since the furnace combustion products (an inert gas) are not mixed with the initial combustion mixture, the combustion is very stable and forms a stable flame region. Also, since the combustion adjacent the flame stabiliser 4 is achieved with the use of cold air rather than pre-heated air, the flame temperature is kept low. Thus, NOx production is inhibited and the fuel supply duct 3 and the flame stabiliser 4 are protected from deterioration due to high temperature oxidation.

Once a stable flame has been achieved, while some air may still be introduced into the room temperature air supply duct 5, the remaining air necessary for complete fuel combustion is injected into the furnace 2 through the plurality of high temperature air supply ducts 6. The air is ejected from these ducts into the furnace at a high velocity and entrains the combustion products in the furnace before mixing with the fuel in the region of the stable flame formed adjacent the flame stabiliser 4 so as to sustain combustion.

As described above, in the present invention, since air and fuel are injected directly into the large furnace volume, unlike conventional combustion methods of injecting air and fuel into a narrow burner space for mixing and burning, the various jets from the injecting sources suck large volumes of furnace gas into them. Therefore, the furnace gas which is inert becomes involved in the combustion zone and greatly lowers the flame temperature which in turn results in a reduced formation of nitrogen oxides compared with that in prior-art furnaces.

The post-combustion exhaust gas in the furnace is discharged through the high temperature air supply ducts 6 of the regenerative burner B which is in exhaust mode, pre-heating its storage material 8. The above combustion and exhaust cycle is alternated through the regenerative burners A and B, for example at a rate of every tens of seconds to every several minutes. Since the combustion occurs only in the furnace 2, the refractory materials used in ordinary burners to surround the flame are not required. Furthermore, since the heat storage material 8 is partially or wholly located in the furnace wall, no refractory heat-insulating lining is required in the regenerator. These are significant advantages provided by the present invention.

When fuel is introduced through the fuel supply duct 3 into the regenerative burner A, it is mixed with air supplied through the room temperature air supply duct 5 near the flame stabiliser 4 and downstream thereof to form a stable flame 18 in the furnace. The amount of room temperature air supplied is preferably small, accounting for less than 15% of the total air introduced into the furnace. The combustion caused by the small amount of room temperature air takes place at low temperatures.

The major combustion reaction then takes place subsequently in the furnace 2 and is a slow combustion involving a large amount of furnace gas 16 before producing high furnace temperatures. This reduces the production of NOx effectively. In more detail while the stable flame 18 is formed and sustained, the high temperature air heated by the heat storage material 8 is injected at a high velocity through the plurality of high temperature air supply ducts 6. The pre-heated air sucks in and mixes with a large amount of furnace combustion gas which results in a low oxygen partial pressure while combustion takes place; the flame is stabilised by slow combustion and low NOx forming combustion is sustained.

The equipment further includes a pilot burner supplied through a pilot duct 15 extending through the room temperature air supply duct 5 and terminating near the flame stabiliser 4. The room temperature air is injected continuously into the furnace 2 irrespective of whether the regenerative burner is in combustion mode or exhaust mode and the pilot burner and the flame stabiliser are therefore always cooled by the room temperature air and protected from deterioration due to high temperature oxidation. Thus, no special cooling system is required.

Furthermore, the pilot burner is located in a region in which the pressure fluctuation is very small so that a stable pilot flame can be formed. If the pilot burner is not used, an ignition spark can be generated directly in the flame stabiliser 4 to ignite a small amount of fuel and, after a reliable flame has been established, the amount of fuel can be increased. A flame detector 19 installed in the room temperature air supply duct 5 can give a cooling effect similar to that achieved by the pilot burner 15.

With reference specifically to Figure 4, this shows a regenerator 10 which, as mentioned above, is tapered toward the furnace. This enables the heat storage material 8 to be removed easily from the regenerator 10 simply by removal of the cover over the outlet 12 which allows the material to flow out. To pack the regenerator 10 with the storage material 8, the cover of the outlet 12 is replaced and the cover of the inlet 11 is opened allowing the regenerator 10 to be packed easily with the heat storage material 8 even while the burners are installed in the furnace, without leaving any excessive spaces in the material. In particular, the regenerator 10 can be packed right to the top so that no channel is left here as in some prior art arrangements and the waste heat recovery is made much more efficient.

The present invention has a number of advantages. (1) The method results in the recirculation of furnace gas before any flames are generated in the furnace interior and while the continuous combustion occurs; as a result, no local hot spots are formed and NOx emission is kept at a low level. (2) A stabilised flame can be maintained with the use of a small amount of air at room temperature and this interacts with the furnace combustion gas before it encounters pre-heated, high temperature air in the furnace. The pre-heated high temperature air jets encounter and mix with the furnace combustion gas as the air is injected into the furnace which lowers the oxygen partial pressure. Since the main combustion progresses while the pre-heated high temperature air is mixing with the furnace combustion gas in a lowered oxygen partial pressure, slow combustion occurs and a low flame temperature results which effectively reduces the formation of NOx. (3) Since the flame is generated directly in the furnace, a refractory liner is not required to surround the flame and, since the heat storage material is located at least partly in the furnace wall, heat is also stored in the furnace wall itself during the exhaust phase and the temperature of the exhaust gas coming out of the storage material is so low that no refractory heat insulating lining is required. Further, heat loss is minimised. (4) Room temperature air may be continuously provided to sustain a stable flame, cooling the fuel supply section, pilot burner, flame detector, etc. As a result no special cooling pipe, etc. is required and equipment cost is reduced. Also, the flame is formed in a region little subject to pressure fluctuation and with a low flow velocity so that there is no concern that the flame may be extinguished. (5) The combustion method of the present invention is not a two-stage combustion method which requires minor combustion in a primary combustion chamber prior to combustion in the furnace proper and therefore no such chamber is required, allowing the total structure to be reduced in size compared with prior art structures. Furthermore, since the stable flame is formed by cold air combustion with a small amount of room temperature air, the flame temperature is kept low and the flame stabiliser and the fuel supply duct outlet are protected from deterioration due to high temperature oxidation. This is true not only while cold air is being supplied but also when it is stopped since, at this stage, combustion occurs within the body of the furnace rather than adjacent the stabiliser, enhancing the reliability of the equipment. In addition, since the heat is effectively stored in the furnace wall, a very high degree of thermal efficiency is achieved. (6) The stability of the main flame at low temperatures is ensured by a stable flame adjacent the flame stabiliser even without the switching of air from the room temperature supply duct to the high temperature supply ducts as the furnace temperature varies: low NOx production can therefore be sustained irrespective of the furnace temperature. (7) The overall structure is simpler than prior art structures and equipment costs are reduced comparatively. (8) In the embodiment of Figure 4 the packing and replacement of the heat storage material can be performed very easily while the burners are installed in the furnace, making the burners easier to use. (9) Since no "clearance" (excessive spacing) is formed in the regenerator at the top of the heat storage material, channelling is prevented which results in very efficient waste heat recovery. (10) The tapered regenerator eliminates any wasted space when the heat storage material is packed. (11) Given that the heat storage material is easily exchanged, even dirty exhaust gas which could not be used in conventional burners, can be used in the regenerative burners of the present invention.

## Claims

1. A regenerative burner combustion system (A, B) for a combustion chamber (2), in which a burner (A, B) has a fuel duct (3) for supplying fuel to the chamber (2), a regenerative preheater (10) containing heat storage material (8) for preheating air for supply to the chamber in a combustion stage of the burner operation and alternately for receiving hot exhaust gases (16) from the chamber to reheat its storage material in an exhaust stage of the burner operation, and at least one duct (6) for supplying air heated in the regenerative preheater to the chamber (2), in which the fuel duct (3) and the preheated-air supply duct (6) open directly into the chamber at mutually spaced positions, and in which the burner further includes a cool-air supply duct (5) which opens around the outlet of the fuel supply duct, characterised in that there are provided two burners (A, B) for the combustion chamber (2) and in that a respective flame stabiliser (4) is located at or adjacent the fuel duct outlet for maintaining a flame during the exhaust stage of each burner operation.

2. A regenerative burner combustion system according to Claim 1, further including an auxiliary fuel duct (15) for each burner (A,B), extending through the cool-air supply duct (5) and opening near the flame stabiliser (4) to supply fuel for a pilot burner.

3. A regenerative burner combustion system according to Claim 1 or Claim 2, characterised in that for each burner a chamber of the regenerative preheater which contains the heat-storage material opens into a manifold (7) connected to a plurality of preheated-air supply ducts (6), the system being connectable to the combustion chamber with the said plurality of ducts opening thereinto at positions spaced around the fuel duct opening.

4. A regenerative burner combustion system according to Claim 3, characterised in that the manifold (7) tapers towards the preheated air supply ducts (6).

5. A regenerative burner combustion system according to any preceding claim, characterised in that the heat storage material (8) is housed in a chamber which tapers towards the at least one preheated air supply duct, in that the heat storage material comprises separate bodies packed into the chamber, and in that a heat-storage material inlet (11) is provided at the top of the chamber and a heat storage material outlet (12) is provided at the bottom of the chamber.

6. A regenerative burner combustion system according to any preceding claim, characterised in that constituent parts of each burner (A, B) are provided in a body which can be fitted to the wall (1) of a combustion chamber (2) with the cool-air duct (5) and the or each preheated-air duct (6) opening through the wall into the chamber at spaced positions and the fuel duct (3) opening through the cool-air duct.

7. A regenerative burner combustion system as claimed in Claim 6, characterised in that the body is insertable in an aperture in the combustion chamber wall (1) with the regenerative preheater housed at least partly in the wall of the combustion chamber.

8. A regenerative burner combustion system according to any one of Claims 1 to 7, each burner being connected with its fuel duct and at least one preheated-air supply duct opening directly through respective outlets into the combustion chamber at spaced positions and each cool-air supply duct opening into the chamber around each fuel supply duct outlet, the burners being operable in alternation each to supply air heated in its preheater to the chamber to mix with fuel therein for combustion and to receive exhaust gases therefrom to reheat its heat-storage material.

9. A regenerative burner combustion system according to Claim 8, characterised in that the heat storage material (8) is housed at least partly in the wall (1) of the combustion chamber (2).

10. A method of achieving fuel-in-air combustion in a combustion chamber having a pair of regenerative burners, including the steps of supplying fuel and preheated air to the combustion chamber via one burner in a combustion stage by supplying the fuel and the preheated air to the chamber through respective fuel and preheated-air ducts having mutually spaced outlets such that the flows mix and burn within the body of the chamber, and withdrawing combustion products through the preheated-air ducts of the other burner in an exhaust stage, and alternating the combustion and exhaust stages of the said two regenerative burners, and at least when the combustion chamber is below a temperature at which the fuel and air therein burn spontaneously, supplying cool air to the chamber through cool air inlets immediately around the outlet of the fuel duct of the burner in the combustion stage at that time into the chamber and burning the fuel in the cool air to form a relatively low-temperature flame, and also supplying cool air and fuel to the chamber also during the exhaust stage of each burner whereby to maintain a flame at flame stabilising means adjacent the said fuel duct outlet to the combustion chamber during the said exhaust stage.

11. A method according to Claim 10, characterised in that a minor proportion of the air required for complete combustion of fuel supplied to the combustion chamber is supplied as cool air around the fuel outlet throughout the period of operation of the chamber, whether or not the combustion chamber temperature is above the spontaneous ignition point.

12. A method according to Claim 11, characterised in that the proportion of cool air supplied is up to substantially 15% of the total volume of air required.

13. A method according to any one of Claims 10 to 12, carried out with the use of a regenerative burner system according to any one of Claims 1 to 9.

## Patentansprüche

1. Regenerativbrenner-Verbrennungssystem (A, B) für einen Feuerraum (2), bei dem ein Brenner (A, B) eine Brennstoffleitung (3) zum Zuführen von Brennstoff zum Feuerraum (2), einen Wärmespeicherungsmaterial (8) enthaltenden Regeneratiworwärmer (10), der in der Verbrennungsphase des Brennerbetriebs die dem Feuerraum (2) zugeführte Luft vorwärmt und in der Auspuffphase des Brennerbetriebs warme Abgase (16) aus dem Feuerraum (2) aufnimmt, um sein Wärmespeicherungsmaterial (8) wieder zu erwärmen, sowie mindestens eine Leitung (6) zum Zuführen von im Regenerativvorwärmer (10) erwärmter Luft zum Feuerraum (2) aufweist, wobei sich die Brennstoffleitung (3) und die Warmluftleitung (6) voneinander beabstandet direkt in den Feuerraum (2) öffnen und der Brenner weiterhin eine Kaltluftzufuhrleitung (5) umfasst, die sich um den Auslass der Brennstoffleitung (3) herum öffnet,
dadurch gekennzeichnet,
dass für den Feuerraum (2) zwei Brenner (A, B) vorgesehen sind und dass an oder neben den Auslässen der Brennstoffleitungen (3) jeweils ein Flammenstabilisator (4) angeordnet ist, der während der Auspuffphase des Brennerbetriebs die Flamme am Brennen hält.

2. Regenerativbrenner-Verbrennungssystem nach Anspruch 1, das weiterhin für jeden der Brenner (A, B) eine Zusatz-Brennstoffleitung (15) umfasst, die durch die Kaltluftzufuhrlei. tung (5) hindurch verläuft und sich in der Nähe des Flammenstabilisators (4) öffnet, um einem Zündbrenner Brennstoff zuzuführen.

3. Regenerativbrenner-Verbrennungssystem nach Anspruch 1 oder 2, dadurch gekennzeichnet, dass bei jedem der Brenner eine das Wärmespeicherungsmaterial enthaltende Kammer des Regenerativvorwärmers sich in einen Verteiler (7) öffnet, der mit mehreren Warmluftleitungen (6) verbunden ist, wobei sich das System so mit dem Feuerraum verbinden lässt, dass sich diese Leitungen um den Auslass der Brennstoffleitung herum in den Feuerraum öffnen.

4. Regenerativbrenner-Verbrennungssystem nach Anspruch 3, dadurch gekennzeichnet, dass sich der Verteiler (7) zu den Warmluftleitungen (6) hin verjüngt.

5. Regenerativbrenner-Verbrennungssystem nach einem der vorhergehenden Ansprüche, dadurch gekennzeichnet, dass das Wärmespeicherungsmaterial (8) in einer Kammer, die sich zu der mindestens einen Warmluftleitung (6) hin verjüngt, enthalten ist, dass das Wärmespeicherungsmaterial (8) einzelne, in die Kammer gefüllte Körper umfasst und dass ein Wärmespeicherungsmaterial-Einlass (11) auf der Oberseite der Kammer und ein Wärmespeicherungsmaterial-Auslass (12) auf der Unterseite der Kammer vorgesehen ist.

6. Regenerativbrenner-Verbrennungssystem nach einem der vorhergehenden Ansprüche, dadurch gekennzeichnet, dass Bauteile jedes der Brenner (A, B) in einem Körper vorgesehen sind, der sich in die Wand (1) eines Feuerraums (2) so einpassen lässt, dass die Kaltluftzufuhrleitung (5) und die Warmluftleitung (6) bzw. Warmluftleitungen (6) sich durch die Wand hindurch voneinander beabstandet in die Kammer öffnen und die Brennstoffleitung (3) sich durch die Kaltluftzufuhrleitung hindurch öffnet.

7. Regenerativbrenner-Verbrennungssystem nach Anspruch 6, dadurch gekennzeichnet, dass sich dieser Körper so in eine Öffnung der Wand (1) des Feuerraums (2) einsetzen lässt, dass der Regeneratiworwärmer zumindest teilweise von der Wand (1) des Feuerraums (2) umgeben ist.

8. Regenerativbrenner-Verbrennungssystem nach einem der Ansprüche 1 bis 7, bei dem jeder der Brenner so angebracht ist, dass sich seine Brennstoffleitung und seine mindestens eine Warmluftleitung an ihren Auslässen voneinander beabstandet direkt in den Feuerraum öffnen und jede der Kaltluflzufuhrleitungen sich um den Auslass der Brennstoffleitung herum in den Feuerraum öffnet, und die Brenner so betrieben werden können, dass sie abwechselnd in ihrem Vorwärmer erwärmte Luft dem Feuerraum zuführen, um diese zur Verbrennung mit Brennstoff zu mischen, und aus dem Feuerraum Abgase aufnehmen, um ihr Wärmespeicherungsmaterial wieder zu erwärmen.

9. Regenerativbrenner-Verbrennungssystem nach Anspruch 8, dadurch gekennzeichnet, dass das Wärmespeicherungsmaterial (8) zumindest teilweise von der Wand (1) des Feuerraums (2) umgeben ist.

10. Verfahren zur Verbrennung von Brennstoff in Luft in einem zwei Regenerativbrenner aufweisenden Feuerraum, bei dem
- in der Verbrennungsphase dem Feuerraum über einen Brenner Brennstoff und vorgewärmte Luft zugeführt wird, indem der Brennstoff und die vorgewärmte Luft über eine Brennstoffleitung bzw. Warmluftleitungen, deren Auslässe so voneinander beabstandet sind, dass sich die Ströme im Körper des Feuerraums mischen und verbrennen, in den Feuerraum geleitet werden,
- in der Auspuffphase Verbrennungsprodukte über die Warmluftleitungen des anderen Brenners entnommen werden,
- die Verbrennungsphase und Auspuffphase bei den beiden Regenerativbrennern abgewechselt werden,
- zumindest dann, wenn die Temperatur des Feuerraums niedriger ist als die Temperatur, bei der die Luft und der Brennstoff spontan verbrennen, in der Verbrennungsphase dem Feuerraum durch Kaltlufteinlässe hindurch, die unmittelbar um den Auslass der Brennstoffleitung des Brenners herum angeordnet sind, Kaltluft zugeführt und der Brennstoff in der Kaltluft verbrannt wird, um eine relativ kühle Flamme zu bilden,
- und auch in der Auspuffphase eines Brenners dem Feuerraum Kaltluft und Brennstoff zugeführt wird, um die Flamme an einer Flammenstabilisationseinrichtung, die in der Nähe des Auslasses der Brennstoffleitung angeordnet ist, während der Auspuffphase am Brennen zu halten.

11. Verfahren nach Anspruch 10, dadurch gekennzeichnet, dass während der ganzen Betriebszeit des Feuerraums ein kleiner Teil der Luft, die für die vollständige Verbrennung des dem Feuerraum zugeführten Brennstoffs benötigt wird, um den Auslass der Brennstoffleitung herum als Kaltluft zugeführt wird, unabhängig davon, ob die Temperatur des Feuerraums über dem Punkt der spontanen Entzündung liegt.

12. Verfahren nach Anspruch 11, dadurch gekennzeichnet, dass der Anteil zugeführter Kaltluft bis zu 15 % des Gesamtvolumens der benötigten Luft beträgt.

13. Verfahren nach einem der Ansprüche 10 bis 12, für das ein Regenerativbrenner-Verbrennungssystem nach einem der Ansprüche 1 bis 9 verwendet wird.

## Revendications

1. Système régénérateur pour brûleur à combustion (A, B) pour une chambre de combustion (2), dans lequel un brûleur (A, B) comporte un conduit de combustible (3) pour fournir du combustible à la chambre (2), un dispositif de préchauffage régénérateur (10) contenant un matériau (8) accumulateur de chaleur pour préchauffer l'air destiné à être fourni à la chambre dans une étape de combustion du fonctionnement du brûleur et en alternance pour recevoir des gaz d'échappement chauds (16) provenant de la chambre de façon à réchauffer son matériau accumulateur dans une étape d'échappement du fonctionnement du brûleur, et au moins un conduit (6) pour fournir de l'air chauffé dans le dispositif de préchauffage régénérateur à la chambre (2), dans lequel le conduit de combustible (3) et le conduit (6) de fourniture de l'air préchauffé ouvrent directement dans la chambre en des positions espacées l'une de l'autre, et dans lequel le brûleur comprend en outre un conduit (5) de fourniture d'eir de refroidissement qui s'ouvre autour de l'orifice de sortie du conduit de fourniture du combustible, caractérisé en ce que deux brûleurs sont prévus (A, B) pour la chambre de combustion (2) et en ce qu'un stabilisateur de flamme respectif (4) est disposé au niveau de l'ouverture de sortie du conduit de combustible ou adjacent à cette ouverture pour maintenir une flamme lors de l'étape d'échappement du fonctionnement de chaque brûleur.

2. Système régénérateur pour brûleur à combustion selon la revendication 1, comprenant en outre un conduit auxiliaire (15) de combustible pour chaque brûleur (A, B), s'étendant à travers le conduit (5) de fourniture d'air de refroidissement et s'ouvrant à proximité du stabilisateur de flamme (4) de façon à fournir du combustible à un brûleur pilote.

3. Système régénérateur pour brûleur à combustion selon la revendication 1 ou la revendication 2, caractérisé en ce que pour chaque brûleur une chambre du dispositif de préchauffage régénérateur qui contient le matériau accumulateur de chaleur s'ouvre dans un collecteur (7) relié à une pluralité de conduit de fourniture d'air préchauffé (6), le système pouvant être relié à la chambre de combustion avec ladite pluralité de conduits débouchant à l'intérieur en des positions espacées autour de l'ouverture du conduit de combustible.

4. Système régénérateur pour brûleur à combustion selon la revendication 3, caractérisé en ce que le collecteur (7) va en se rétrécissant en direction des conduits (6) de fourniture d'air préchauffé.

5. Système régénérateur pour brûleur à combustion selon l'une quelconque des revendications précédentes, caractérisé en ce que le matériau (8) accumulateur de chaleur est logé dans une chambre qui va en se rétrécissant en direction du au moins un conduit de fourniture d'air préchauffé, en ce que le matériau accumulateur de chaleur comprend des corps séparés conditionnés à l'intérieur de la chambre, et en ce qu'une entrée (11) de matériau accumulateur de chaleur est prévue au sommet de la chambre et en ce qu'une sortie (12) de matériau accumulateur de chaleur est prévue à la base de la chambre.

6. Système régénérateur pour brûleur à combustion selon.l'une quelconque des revendications précédentes, caractérisé en ce que des parties constituantes de chaque brûleur (A, B) sont prévues dans un corps qui peut être ajusté sur la paroi (1) d'une chambre de combustion (2) avec le conduit (5) d'air de refroidissement et le ou chaque conduit (6) d'air préchauffé s'ouvrant à travers la paroi à l'intérieur de la chambre en des positions espacées et le conduit (3) de combustible s'ouvrant à travers le conduit de refroidissement d'air.

7. Système régénérateur pour brûleur à combustion selon la revendication 6, caractérisé en ce que le corps peut être introduit dans une ouverture dans la paroi (1) de la chambre de combustion avec le dispositif de préchauffage régénérateur au moins en partie logé dans la paroi de la chambre de combustion,

8. Système régénérateur pour brûleur à combustion selon l'une quelconque des revendications 1 à 7, chaque brûleur étant relié à son conduit de combustible et à au moins un conduit de fourniture d'air préchauffé s'ouvrant directement à travers des orifices de sortie respectifs à l'intérieur de la chambre de combustion en des positions espacées et chaque conduit de fourniture d'air de refroidissement s'ouvrant dans la chambre autour de chaque sortie de conduit de fourniture de combustible, les brûleurs pouvant être commandés en fonctionnement en alternance pour fournir chacun de l'air chauffé dans son dispositif de préchauffage à la chambre de façon qu'il se mélange avec le combustible dans la chambre pour réaliser la combustion et pour recevoir des gaz d'échappement qui en proviennent pour réchauffer son matériau accumulateur de chaleur.

9. Système régénérateur pour brûleur à combustion selon la revendication 8, caractérisé en ce que le matériau accumulateur de chaleur (8) est logé au moins partiellement dans la paroi (1) de la chambre de combustion (2).

10. Procédé pour l'obtention d'une combustion d'un combustible dans l'air dans une chambre de combustion comprenant une paire de brûleurs régénérateurs, comprenant les étapes consistant à fournir un combustible et de l'air préchauffé à la chambre de combustion par l'intermédiaire d'un brûleur dans une étape de combustion en fournissant le combustible et l'air préchauffé à la chambre à travers des conduits respectifs de combustible et d'air préchauffé présentant des orifices de sortie espacés l'un de l'autre de telle façon que les flux se mélangent et brûlent à l'intérieur du corps de la chambre, et à soutirer les produits de la combustion à travers les conduits d'air préchauffé de l'autre brûleur dans une étape d'échappement, et en faisant alterner les étapes de la combustion et de l'échappement desdits deux brûleurs régénérateurs, et à fournir, au moins lorsque la chambre de combustion est à une température inférieure à celle pour laquelle un combustible et l'air qui y sont contenus brûlent spontanément, de l'air de refroidissement à la chambre au travers d'entrées d'air de refroidissement immédiatement autour de l'orifice de sortie du conduit de combustible du brûleur dans l'étape de combustion à cet instant à l'intérieur de la chambre et à faire brûler le combustible dans l'air de refroidissement de façon à former une flamme à température relativement basse, et à fournir également de l'air de refroidissement et du combustible à la chambre également lors de l'étape d'échappement de chaque brûleur de façon à maintenir une flamme au niveau de moyens de stabilisation de la flamme adjacents audit orifice de sortie du conduit de combustible en direction de la chambre de combustion lors de ladite étape d'échappement.

11. Procédé selon la revendication 10, caractérisé en ce qu'une proportion mineure de l'air requis pour une combustion complète du combustible fourni dans la chambre de combustion est fournie en tant qu'air de refroidissement autour de l'orifice de sortie du combustible tout au long de la période de fonctionnement de la chambre, que la température de la chambre de combustion se situe ou non au-dessus du point d'allumage spontané.

12. Procédé selon la revendication 11, caractérisé en ce que la proportion de l'air de refroidissement fourni se situe jusqu'à 15% environ du volume total d'air requis.

13. Procédé selon l'une quelconque des revendications 10 à 12, mis en oeuvre avec l'utilisation d'un système régénérateur pour brûleur selon l'une quelconque des revendications 1 à 9.
